# EUROPEAN PATENT SPECIFICATION

(11) **EP 4 349 744 B1**
(45) Date of publication and mention of the grant of the patent: **03.09.2025**
(21) Application number: 23753100.9
(22) Date of filing: 07.02.2023
(51) Int. Cl.: B65G 47/90, B65G 43/08, B65G 47/88, B65G 13/00, B65G 47/28, B65H 67/06, B65G 65/00

(54) **TRANSFER DEVICE COMPRISING AUTOMATIC LIFTING UNIT**
TRANSFERVORRICHTUNG MIT AUTOMATISCHER HUBEINHEIT
DISPOSITIF DE TRANSFERT COMPRENANT UNE UNITÉ DE LEVAGE AUTOMATIQUE

(30) Priority: 08.02.2022 KR 20220016472
(43) Date of publication of application: 10.04.2024
(73) Proprietor: LG Energy Solution, Ltd., Seoul 07335 (KR)
(72) Inventor: WON, Seung Jae, Daejeon 34122 (KR); JEONG, Byeong Oh, Daejeon 34122 (KR)
(74) Representative: Goddar, Heinz J.
(86) International application number: PCT/KR2023/001693
(87) International publication number: WO 2023/153750

(56) References cited:
- JP-A- 2000 142 911
- KR-A- 20170 133 994
- KR-A- 20170 133 994
- KR-A- 20200 127 400
- KR-A- 20210 028 381
- KR-A- 20210 028 381
- KR-A- 20210 061 488
- KR-A- 20210 061 488
- KR-B1- 100 642 316
- US-A- 5 738 484

## Description

### Technical Field

The present invention relates to a transfer device, which relates, particularly, to a transfer device comprising an automatic lifting unit.

### Background Art

In order to load raw materials such as various kinds of foils on a transportation carriage, a manual operation of lifting a bobbin using a hoist and a string has conventionally been performed.

However, upon manual hoist working of the bobbin with high-load products, there is a risk of a fall accident, and thus two or more workers have performed the work due to the dangerous work.

KR 10 2021 0028381 A describes a roll transfer device suitable to align a position of a roll where a film used for a secondary battery production process is wound to provide the roll to a post-process. The roll transfer device comprises a main frame, an upper frame, a worktable, and a vertical drive means. The device comprises a roll centering module that adjusts the position of an elevating module in conjunction with a roll grip module so that the roll coupled to the roll grip module is raised and lowered through the elevating module while maintaining the longitudinal center point.

### Disclosure

### Technical Problem

Therefore, it is an object of the present invention to provide a transfer device automatically centering and lifting a bobbin for dangerous work automation and worker reduction.

### Technical Solution

In order to achieve the above-described object, the present invention provides a transfer device comprising: a barcode reader for reading a barcode attached to a box accommodating a bobbin loaded with raw materials; a fork unit chucking the bobbin in the X-axis direction corresponding to the width direction or the lateral direction, and provided with a distance sensor for sensing a distance to the bobbin, and a chucking sensor for sensing the bobbin chucking; a traveling drive unit connected to the fork unit at the top of the fork unit, elevating the fork unit in the Z-axis direction corresponding to the height direction or the elevating direction, and moving the fork unit in the Y-axis direction corresponding to the longitudinal direction or the traveling direction; and a control unit for controlling Z-axis centering of the fork unit in conjunction with the barcode reader and the distance sensor, X-axis centering of the fork unit in conjunction with the chucking sensor, and Z-axis elevation and Y-axis movement of the fork unit, respectively, to automatically control lifting of the bobbin.

In the present invention, the fork unit may comprise: a fork unit frame having a plate-like structure; an orthogonal robot provided with a motor, and installed on the lower part of the fork unit frame to be movable in the X-axis direction; a fork arm installed on the lower part of the orthogonal robot; a fork installed inside the lower end of the fork arm to chuck the bobbin; a distance sensor installed on the lower part of the orthogonal robot to the inside of the fork arm; a chucking sensor installed at the lower end of the fork arm; an elevating guide shaft installed on the upper part of the fork unit frame; a sensor support installed toward the upper part of the fork unit frame; and an elevating regular position sensor and an elevating limit sensor installed on the sensor support.

In the present invention, the transfer device, wherein the traveling drive unit comprises: a traveling drive unit frame having a plate-like structure; a traveling motor for movement in the Y-axis direction installed on the upper part of the traveling drive unit frame; a elevating motor for movement in the Z-axis direction installed on the upper part of the traveling drive unit frame; a rack jack installed in the traveling drive unit frame in the Z-axis direction to enable elevation, converting rotation of the elevating motor into linear motion, and connected to the fork unit to elevate the fork unit; an elevating guide bush installed in the traveling drive unit frame, and inserted by an elevating guide shaft of the fork unit; a sensor support installed in the traveling drive unit frame in the Z-axis direction; and an elevating regular position sensor and an elevating limit sensor installed on the sensor support.

The transfer device according to the present invention may further comprise a conveyor unit disposed on the lower part of the fork unit, and putting the box thereon; wherein the conveyor unit may comprise: a free roller lane for moving the box in the Y-axis direction; a box stopper installed at the rear end of the Y-axis of the free roller lane for Y-axis centering of the box; a cargo alignment sensor disposed adjacent to the box stopper to check whether the box is positioned in contact with the box stopper; an entry guide block installed at the front end of the Y-axis of the free roller lane to guide the entry path of a transport vehicle; and a transport vehicle end stopper disposed adjacent to the box stopper to prevent a collision between transport vehicles.

The transfer device according to the present invention may further comprise a centering unit installed outside the conveyor unit in the X-axis direction and adjusting the position of the box in the X-axis direction and the Y-axis direction; wherein the centering unit may comprise: a box pusher contacting the box for centering the box; an X-axis cylinder connected to the box pusher to move the box pusher in the X-axis direction; a moving plate on which the X-axis cylinder is installed; a Y-axis cylinder connected to the moving plate to move the box pusher in the Y-axis direction; an LM (linear motion) guide connected to the moving plate to guide movement of each axis direction; a centering unit frame in which the Y-axis cylinder is installed; and a size check sensor installed on the upper part of the centering unit frame to check the size of the box.

The transfer device according to the present invention may further comprise a main frame unit; wherein the main frame unit may comprise: a three-dimensional main frame; a light curtain sensor installed on the side of the main frame to be interlocked during lower maintenance; a cableveyor installed on the upper part of the main frame to guide cables; an LM guide installed on the upper part of the main frame and connected to the traveling drive unit frame to guide the traveling direction of the traveling drive unit frame; and a traveling regular position sensor and a traveling limit sensor installed on the upper part of the main frame.

The transfer device according to the present invention may further comprise a bobbin stacking stand installed at the rear end of the Y-axis of the main frame unit to place the bobbin thereon; wherein the bobbin stacking stand may comprise: a three-dimensional stacking stand frame; a guide block installed on the upper part of the stacking stand frame to prevent the bobbin from being pushed in the axial direction; a cargo detection sensor installed on the upper part of the stacking stand frame to determine whether the bobbin is present in the bobbin stacking stand; a bobbin detection sensor installed on the guide block to determine whether the bobbin is present in the guide block; and a transport vehicle end stopper installed toward the rear end of the Y-axis of the stacking stand frame to prevent a collision between the transport vehicle and the bobbin stacking stand.

The transfer device according to the present invention may further comprise a cover assembly installed on the top and side surfaces of the main frame unit; wherein the cover assembly may comprise: a three-dimensional cover assembly frame; a ladder installed on the side surface of the cover assembly frame to provide a movement path during upper maintenance; and a safety door installed on the side surface of the cover assembly frame.

The transfer device according to the present invention may further comprise an entry guide installed at the entrance of the main frame unit to guide the path of the transport vehicle when the box is input; wherein the entry guide may comprise: a three-dimensional entry guide frame; a roller installed in the Z-axis direction inside the entry guide frame to prevent friction between the transport vehicle and the entry guide; and a pad installed toward the front end of the entry guide frame to prevent damage to the transport vehicle and the entry guide.

The transfer device according to the present invention may further comprise a maintenance frame installed on the upper part of the main frame unit to be for mounting the motor during maintenance.

### Advantageous Effects

By automatically centering and lifting the bobbin using the transfer device according to the present invention, it is possible to automate dangerous work and reduce the number of workers.

### Description of Drawings

Figures 1a and 1b show the overall configuration of the transfer device according to the present invention.
Figures 2a and 2b show the main frame unit configuration of the transfer device according to the present invention.
Figures 3a, 3b, 3c, and 3d show the configuration of the traveling drive unit of transfer device according to the present invention.
Figures 4a, 4b, and 4c show the fork unit configuration of the transfer device according to the present invention.
Figures 5a, 5b, and 5c show the centering unit configuration of the transfer device according to the present invention.
Figure 6 shows the conveyor unit configuration of the transfer device according to the present invention.
Figures 7a and 7b show the bobbin stacking stand configuration of the transfer device according to the present invention.
Figure 8 shows the cover assembly configuration of the transfer device according to the present invention.
Figure 9 shows the entry guide configuration of the transfer device according to the present invention.
Figure 10 shows the box cover stacking stand configuration of the transfer device according to the present invention.
Figure 11 shows the maintenance frame configuration of the transfer device according to the present invention.
Figures 12a and 12b show a foil, a bobbin, and a box.

### Mode for Invention

Hereinafter, the present invention will be described in detail with reference to the accompanying drawings.

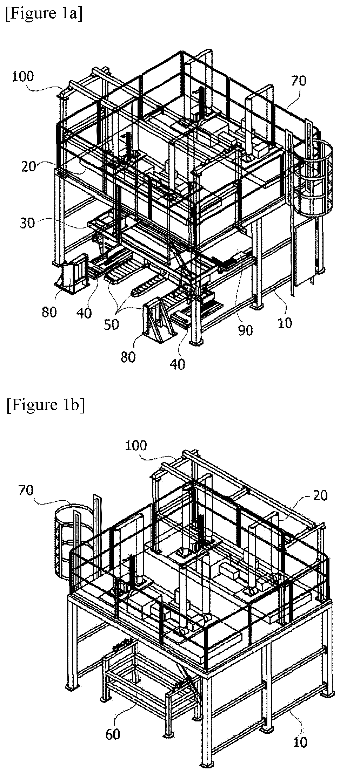

Referring to Figures 1a and 1b, when the transfer device according to the present invention is largely divided, it may be composed of a main frame unit (10), a traveling drive unit (20), a fork unit (30), a centering unit (40), a conveyor unit (50), a bobbin stacking stand (60), a cover assembly (70), an entry guide (80), a box cover stacking stand (90), a maintenance frame (100), a barcode reader, a control unit, and the like.

The transfer device according to the present invention may be used to transfer raw materials. The raw material may be, for example, foils, films, and the like made of metal, plastic, and the like, which may be, for example, a metal foil, a plastic film, and the like. The foil may be, for example, a foil used in a battery (for automobiles, etc.), and specifically, the foil may be a foil used as a substrate (current collector) of an electrode (positive electrode, negative electrode), and may be, more specifically, a copper (Cu) foil (negative electrode) and an aluminum (Al) foil (positive electrode), and the like.

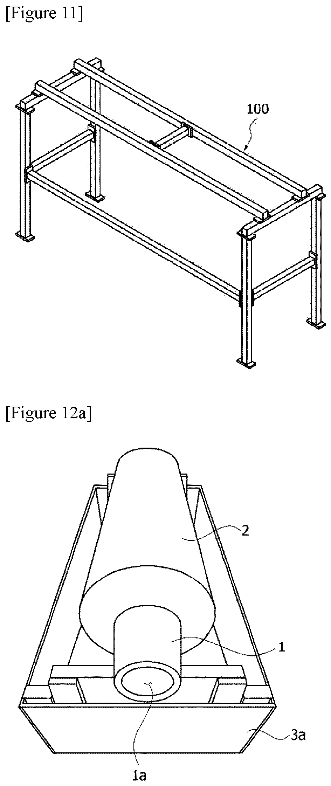

Referring to Figure 12a, the foil (2) may be transferred in a state of being wound around the bobbin (1) in a roll form. Even in the case of a film, it may be transferred in a state of being wound around the bobbin (1) in a roll form. The bobbin (1) may be composed of a hollow cylindrical structure, and both ends of the bobbin (1) may be open hollow ends (1a), and as the forks (33b) of the fork unit (30) are inserted to these hollow ends (1a), the fork unit (30) may chuck the bobbin (1).

The bobbin (1) around which the foil (2) is wound may be accommodated (loaded) in the box (3). The box (3) may be, for example, a wooden box made of wood, and may also be made of metal, plastic, paper material, or the like.

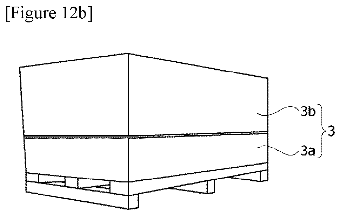

Referring to Figure 12b, the box (3) may comprise a lower box body (3a) and an upper box cover (3b). The box body (3a) may have a hexahedral structure with an inner space and an open top, and the box cover (3b) may have a hexahedral structure with an inner space and an open bottom. A groove on which the bobbin (1) is placed may be formed at the upper end of the box body (3a). After the bobbin (1) around which the foil (2) is wound is placed on the box body (3a), the box body (3a) may be covered with the box cover (3b), and then it may be transferred in this packing box state.

**In** the drawings, the X-axis may be the width direction or the lateral direction of the transfer device. The Y-axis may be the longitudinal direction or the traveling direction of the transfer device. The Z-axis may be the height direction or the elevating direction of the transfer device. **In** Figure 1a, the front end of the Y-axis represents the front (forward), and the rear end of the Y-axis represents the rear (backward). Conversely, in Figure 1b, the front represents the rear end of the Y-axis. The size of the transfer device is not particularly limited, which may be appropriately set, and particularly, the length of the transfer device may be very long as needed, unlike the drawings.

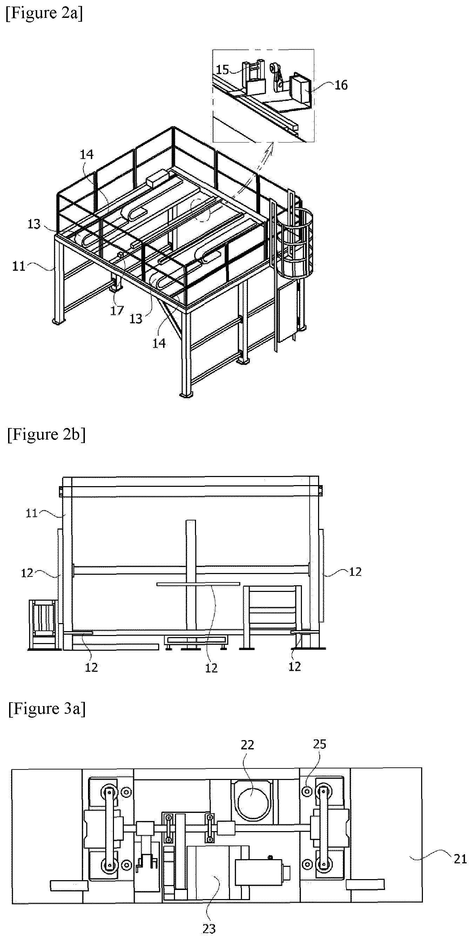

Referring to Figures 2a and 2b, the main frame unit (10) may be composed of a main frame (11), a light curtain sensor (12), a cableveyor (13), an LM guide (14), a traveling regular position sensor (15), and traveling limit sensors (16, 17), and the like.

The main frame (11) forms a basic skeleton, which may consist of a three-dimensional structure in the form of a hexahedron, and may have a size close to the overall size of the transfer device.

The light curtain sensor (12) may be installed on the side surface of the main frame (11) to be interlocked during lower maintenance. Among the side surfaces of the main frame (11), for example, as shown in Figure 2b (side view), the light curtain sensors (12) may be installed at 5 locations, respectively, that is, one in the Z-axis direction at the front end, one in the Y-axis direction at the lower end toward the front end, one in the Y-axis direction toward the center, one in the Y-axis direction at the lower end toward the rear end, and one in the Z-axis direction at the rear end. The light curtain sensor (12) is a kind of safety sensor, and when a worker or the like is sensed by this sensor, the operation of the transfer device may be temporarily stopped.

The cableveyor (13) may be installed on the upper part of the main frame (11) to guide cables. The cableveyors (13) may be installed in the Y-axis direction one by one on both sides of the upper part of the main frame (11).

The LM guide (14) may be installed on the upper part of the main frame (11), and may be connected to the traveling drive unit frame (21) to guide the traveling direction of the traveling drive unit (20). The LM guides (14) may be installed one by one on both sides of the cableveyors (13) in the Y-axis direction, and may be connected to the lower part of the traveling drive unit frame (21).

The traveling regular position sensor (or traveling origin sensor) (15) may be installed on the upper part of the main frame (11) to confirm the origin operation or operation completion of the traveling drive unit (20). The traveling regular position sensor (15) may be installed toward the rear end of the support at the center from the upper part of the main frame (11). The traveling regular position sensor (15) may be a horseshoe sensor.

The traveling limit sensors (16, 17) may be installed on the upper part of the main frame (11) to stop the traveling drive unit (20) while generating an alarm when the limit thereof is exceeded. The traveling limit sensors (16, 17) may be composed of a traveling backward limit sensor (16) and a traveling forward limit sensor (17), where they may be installed toward the rear end and toward the front end of the support at the center from the upper part of the main frame (11), respectively. The traveling limit sensor (16, 17) may be a limit switch sensor.

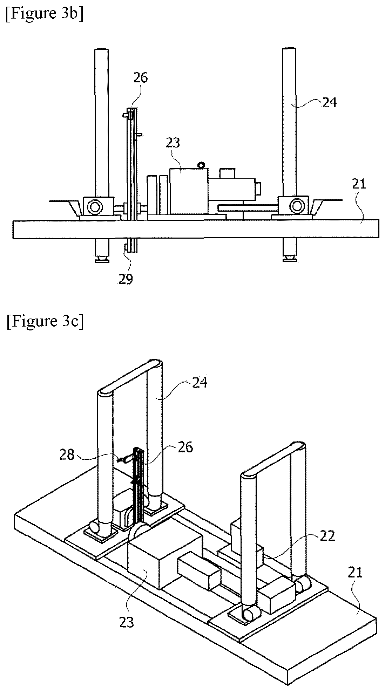

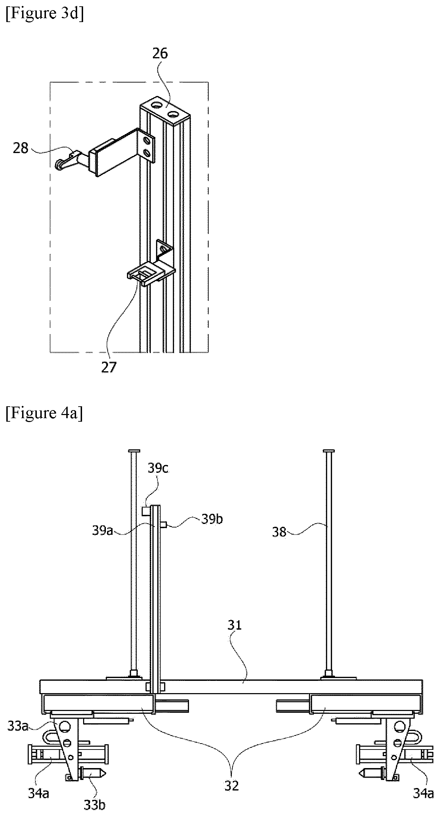

Referring to Figures 3a, 3b, 3c, and 3d, the traveling drive unit (20) may be composed of a traveling drive unit frame (21), a traveling motor (22), an elevating motor (23), a rack jack (24), an elevating guide bush (25), a sensor support (26), an elevating regular position sensor (27), elevating limit sensors (28, 29), and the like.

The traveling drive unit (20) itself may move in the Y-axis direction, and may also be connected to the fork unit (30) at the top of the fork unit (30), and elevate the fork unit (30) in the Z-axis direction, and reciprocate it in the Y-axis direction.

The traveling drive unit frame (21) forms a basic skeleton, which may consist of a rectangular plate-like structure, and reciprocate in the Y-axis direction as its lower part is connected to the LM guide (14) of the main frame unit (10).

The traveling motor (22) may be a traveling motor for movement in the Y-axis direction installed on the upper part of the traveling drive unit frame (21). Although not shown in the drawings, the rotating shaft of the traveling motor (22) may be connected to one of a pair of pulleys (or gears) through an appropriate power transmission mechanism, and a belt (or chain) may be wound around the pair of pulleys to be rotated, and the belt may be directly or indirectly connected to the traveling drive unit frame (21). The pair of pulleys may be disposed toward the front and rear ends of the Y-axis, respectively, and may be fixed to the main frame unit (10), and the like. The belt may be disposed long in the Y-axis direction. By forward-direction and reverse-direction rotation of the pulley and the belt, the traveling drive unit frame (21) may reciprocate in the Y-axis direction. In addition to these pulley and belt mechanisms, other driving mechanisms, for example, cylinder and piston (or rod) mechanisms, rack and pinion mechanisms, and the like may also be used.

The elevating motor (23) may be an elevating motor for movement in the Z-axis direction installed on the upper part of the traveling drive unit frame. Referring to Figure 3a, the rotating shaft of the elevating motor (23) may be connected to the rack jack (24) through an appropriate power transmission mechanism (belt/chain, pulley/gear, rotating shaft, reduction gear, pinion gear, etc.).

The rack jack (24) may be installed on the traveling drive unit frame (21) in the Z-axis direction to enable elevation, convert the rotation of the elevating motor (23) into linear motion, and be connected to the fork unit (30) to elevate the fork unit (30). The rack jack (24) is a rack gear, which may be engaged with a pinion gear to allow linear motion in the Z-axis direction. The rack jack (24) may be composed of a total of 4 by one pair on both sides in the X-axis direction, where the upper part of the pair of rack jacks (24) may be connected through a connecting member. The lower end of the rack jack (24) may be connected to the upper end of the fork unit frame (31) of the fork unit (30). **In** Figure 3, the rack jack (24) is in a state of being raised to the maximum height.

The elevating guide bush (25) may be installed on the traveling drive unit frame (21), and the elevating guide shaft (38) of the fork unit (30) may be inserted into the elevating guide bush (25). The elevating guide bush (25) may be composed of a total of four which are disposed adjacent to the inside of each rack jack (24) in the X-axis direction.

The sensor support (26) may be installed on the traveling drive unit frame (21) in the Z-axis direction, and the elevating regular position sensor (27) and the elevating limit sensors (28, 29) may be attached to the sensor support (26).

The elevating regular position sensor (or elevating origin sensor) (27) may be installed toward the upper end of the sensor support (26) to confirm origin operation or operation completion of the fork unit (30). The elevating regular position sensor (27) may be a horseshoe sensor.

The elevating limit sensors (28, 29) may be installed toward the upper end and toward the lower end of the sensor support (26) to stop the fork unit (30) while generating an alarm when the limit thereof is exceeded. The elevating limit sensors (28, 29) may be composed of an elevating ascent limit sensor (28) and an elevating descent limit sensor (29). The elevating limit sensor (28, 29) may be a limit switch sensor.

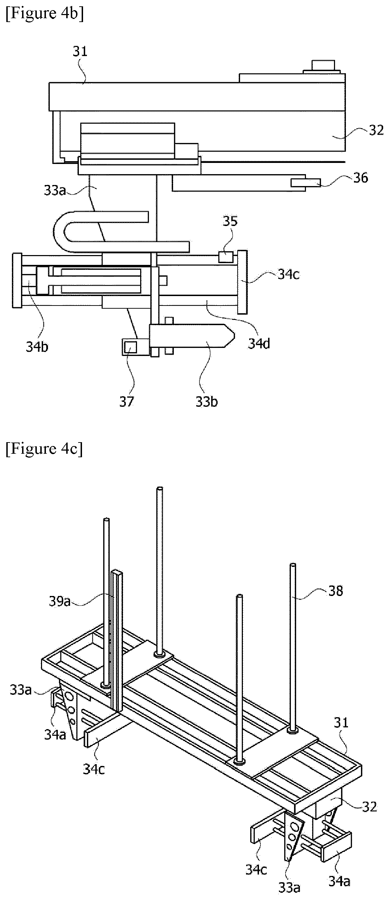

Referring to Figures 4a, 4b, and 4c, the fork unit (30) may be composed of a fork unit frame (31), an orthogonal robot (32), a fork arm (33a), a fork (33b), a box cover cylinder (34a), and a box detection sensor (35), a distance sensor (36), a chucking sensor (37), an elevating guide shaft (38), a sensor support (39a), an elevating origin sensor (39b), and an elevating limit sensor (39c).

The fork unit (30) may be installed on the lower part of the traveling drive unit (20) and the upper part of the conveyor unit (50), and may chuck the cover (3b) of the position-adjusted box (3) in the X-axis direction, and may also chuck the bobbin loaded in the box (3) in the X-axis direction.

The fork unit frame (31) forms a basic skeleton, which may consist of a rectangular plate-like structure, and move up and down in the Z-axis direction as its upper end is connected to the lower end of the rack jack (24) of the traveling drive unit (20).

The orthogonal robot (32) is for linear reciprocation of the chucking member in the X-axis direction, which may be movably installed on the lower part of the fork unit frame (31) in the X-axis direction. The orthogonal robot (32) may comprise a motor for movement in the X-axis direction when chucking the bobbin (1). The orthogonal robot (32) may be composed of two robots, each of which are disposed at both ends of the fork unit frame (31) in the X-axis direction.

The fork arms (33a) may be installed on the lower parts of both orthogonal robots (32) in the Z-axis direction, respectively, to support the fork (33b) and the box cover cylinder (34a). The fork arm (33a) may linearly reciprocate in the X-axis direction along the orthogonal robot (32).

The forks (33b) may be installed inside the lower ends of both fork arms (33a) in the X-axis direction, respectively, to chuck the bobbin (1). The forks (33b) may be inserted into the open hollow ends (1a) of both ends of the bobbin (1) to chuck the bobbin (1), and may linearly reciprocate in the X-axis direction along the fork arm (33a).

The box cover cylinders (34a) are cylinders for movement in the X-axis direction when chucking the box cover (3b), which may be installed in the middles of both fork arms (33a) in the X-axis direction, respectively, to chuck the box cover (3b). The box cover cylinder (34a) may be provided with a cylinder rod (34b) disposed outside the fork arm (33a), a cover pusher (34c) disposed inside the fork arm (33a), and a connecting member (34d) for connecting the cylinder rod (34b) and the cover pusher (34c). The box cover cylinder (34a) may be a pneumatic cylinder.

The cylinder rod (34b) may linearly reciprocate in the X-axis direction from the outside of the fork arm (33a), and the cover pusher (34c) connected to the cylinder rod (34b) through the connecting member (34d) may linearly reciprocate in the X-axis direction from the inside of the fork arm (33a). Therefore, the cover pusher (34c) may linearly reciprocate in the X-axis direction autonomously regardless of the movement of the fork arm (33a).

Figure 4 shows a state where the cover pusher (34c) is most advanced to the inside of the fork arm (33a), that is, a state of chucking the box cover (3b), where it may move backward to come into close contact with the fork arm (33a) in order not to interfere with chucking the bobbin (1) of the fork (33b) when the bobbin (1) is chucked.

The box detection sensor (35) may be installed on the inside site of the fork arm (33a) among the connecting members (34d) of both box cover cylinders (34a) to sense the box cover (3b). The box detection sensor (35) is required for X-axis centering of the fork unit (30) when the box cover (3b) is chucked. The box detection sensor (35) may be a photoelectric sensor.

The distance sensor (36) may be installed on the lower part of both orthogonal robots (32) to the inside of both fork arms (33a) to sense the distance (height) between the bobbin (1) and the box cover (3b), and may determine whether there is an elevating height error. The distance sensor (36) is required for Z-axis centering of the fork unit (30) in conjunction with the barcode reader when the box cover (3b) is chucked and the bobbin (1) is chucked. The distance sensor (36) may be an ultrasonic sensor.

The chucking sensors (37) may be installed at the lower ends of both fork arms (33a) to sense chucking of the bobbin (1). The chucking sensor (37) is required for X-axis centering of the fork unit (30) when the bobbin (1) is chucked. The chucking sensor (37) may be a proximity sensor.

The elevating guide shaft (38) is installed on the upper part of the fork unit frame (31) in the Z-axis direction to serve as a guide when the fork unit (30) elevates. Four elevating guide shafts (38) may be inserted into the four elevating guide bushes (25) of the traveling drive unit (20), respectively.

The sensor support (elevating DOG unit) (39a) may be installed on the upper part of the fork unit frame (31) in the Z-axis direction, and an elevating regular position sensor (39b) and an elevating limit sensor (39c) may be attached to this sensor support (39a).

The elevating regular position sensor (or elevating origin sensor) (39b) may be installed toward the upper end of the sensor support (39a) to confirm origin operation or operation completion of the fork unit (30). The elevating regular position sensor (39b) may be a horseshoe sensor.

The elevating limit sensors (39c) may be installed toward the upper end and toward the lower end of the sensor support (39a), respectively, to stop the fork unit (30) while generating an alarm when the limit thereof is exceeded. The elevating limit sensor (39c) may be composed of an elevating ascent limit sensor and an elevating descent limit sensor. The elevating limit sensor (39c) may be a limit switch sensor.

The sensor support (39a), the elevating regular position sensor (39b), and the elevating limit sensor (39c) may be omitted, when the sensor support (26), the elevating regular position sensor (27), and the elevating limit sensors (28, 29) are installed to the traveling drive unit (20). That is, the sensor support, the elevating regular position sensor, and the elevating limit sensor may be installed in only any one unit of the traveling drive unit (20) and the fork unit (30), and may also be installed in both units.

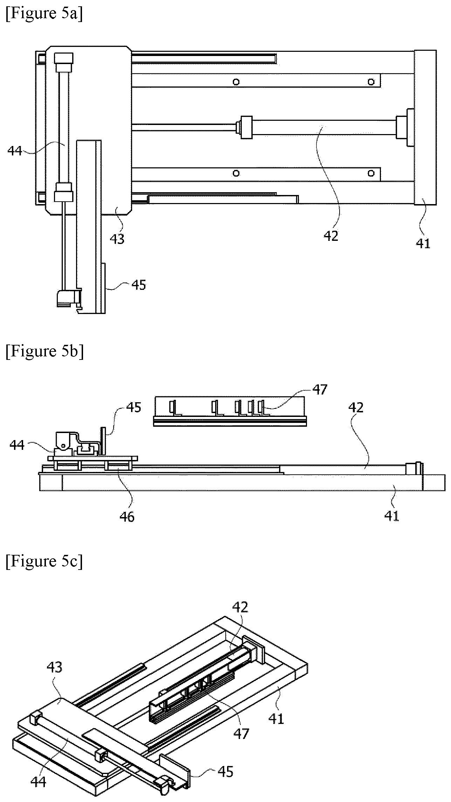

Referring to Figures 5a, 5b, and 5c, the centering unit (40) may be composed of a centering unit frame (41), a Y-axis cylinder (42), a moving plate (43), an X-axis cylinder (44), a box pusher (45), an LM guide (46), a size check sensor (47), and the like.

The centering unit (40) may be installed outside the conveyor unit (50) in the X-axis direction to adjust (center, align) the position of the box (3) in the X-axis direction and the Y-axis direction. Regarding the centering sequence, first, the X-axis centering may be performed, and then the Y-axis centering may be performed.

The centering unit frame (41) forms a basic skeleton, which may consist of an approximately rectangular plate-like structure, and may be installed on both sides of the outer side of the conveyor unit (50) in the X-axis direction.

The Y-axis cylinders (42) may be installed on both centering unit frames (41) in the Y-axis direction to reciprocate the box pusher (45) in the Y-axis direction. The rod of the Y-axis cylinder (42) may be connected to the lower part of the moving plate (43). The Y-axis cylinder (42) may be a pneumatic cylinder.

The moving plate (43) may be connected to the rods of both Y-axis cylinders (42) to reciprocate in the Y-axis direction. The moving plate (43) may have a rectangular plate-like structure, and may be connected to the end of the rod of the Y-axis cylinder (42). The X-axis cylinder (44) may be installed on the upper part of the moving plate (43).

The X-axis cylinder (44) may be installed on both moving plates (43) in the X-axis direction to reciprocate along with the moving plate (43) in the Y-axis direction. The rod of the X-axis cylinder (44) may be connected to the box pusher (45) to move the box pusher (45) in the X-axis direction. The X-axis cylinder (44) may be a pneumatic cylinder.

As the box pusher (45) reciprocates in the Y-axis direction and the X-axis direction by the Y-axis cylinder (42) and the X-axis cylinder (44), respectively, it may center the box (3) in contact with the box (3). The box pusher (45) may be disposed long in the X-axis direction, wherein the outside end in the X-axis direction may be connected to the LM guide (46) installed on the moving plate (43), and the Y-axis front end among the inside ends in the X-axis direction may be connected to the rod end of the X-axis cylinder (44), and a pad may be attached to the Y-axis rear end among the inside ends in the X-axis direction. In Figure 5, the box pusher (45) is in the most advanced state in the Y-axis direction and the X-axis direction, respectively.

The LM guides (46) may be installed on both centering unit frames (41) and the moving plate (43), respectively, to guide movement in each axial direction. The LM guide (46) may be installed in the centering unit frame (41) in the Y-axis direction, and connected to the lower part of the moving plate (43). In addition, the LM guide (46) may be installed on the moving plate (43) in the X-axis direction, and connected to the upper part of the moving plate (43) and the lower part of the box pusher (45), respectively.

The size check sensor (47) may be installed on the upper part of the centering unit frame (41) to check the size of the box (3). The size check sensors (47) may be composed of a plurality of sensors, for example, 5 sensors, as shown in the drawings, and the intervals between the respective sensors may gradually become narrower toward the rear end of the Y-axis. The size check sensor (47) may be a light transmitting/receiving sensor. The size check sensor (47) may be supported on the centering unit frame (41) by an appropriate support means (bracket, support, etc.).

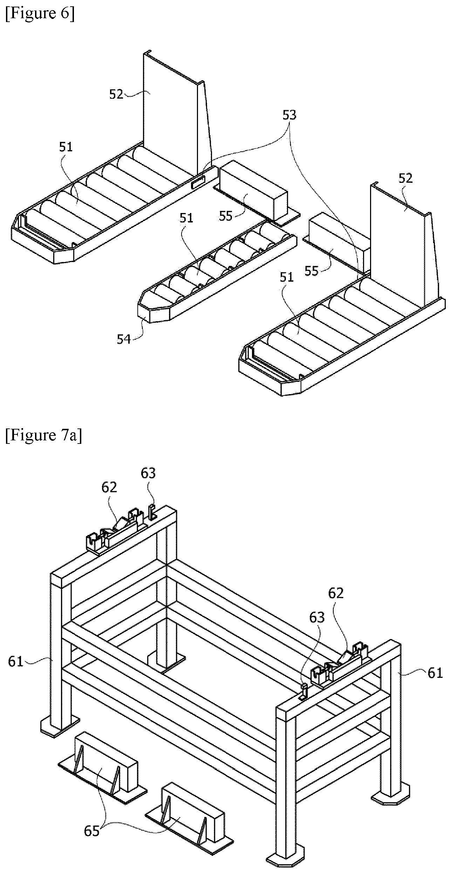

Referring to Figure 6, the conveyor unit (50) may be composed of a free roller lane (51), a box stopper (52), a cargo alignment sensor (53), an entry guide block (54), a transport vehicle end stopper (55), and the like.

The conveyor unit (50) is a conveyor used when adjusting the position of the box (3), which is installed at the front end of the transfer device, thereby being a place where the box (3) is first disposed and the transfer begins.

The free roller lane (51) is for movement of the box (3) in the Y-axis direction, wherein the free roller is not driven by itself, but is capable of freely rotating by external force. The free roller lane (51) may be composed of a plurality of lanes arranged in the Y-axis direction, for example, three lanes, as shown in the drawings. Specifically, main roller lanes may be disposed at both ends in the X-axis direction, and auxiliary roller lanes having a smaller width than that of the main roller lane may be disposed in the center. A space between the main roller lane and the auxiliary roller lane may be a space for a transport vehicle (forklift, carriage, etc.) to enter. Each lane (51) may be equipped with a plurality of free rollers, for example, eight free rollers, as shown in the drawings.

The box stopper (52) is for Y-axis centering of the box (3), which may be installed at the rear end of the Y-axis of both main roller lanes among the free roller lanes (51). The box stopper (52) may be an approximately plate-like structural object disposed in the Z-axis direction. The Y-axis centering may be performed while the box disposed on the free roller lane (51) is pushed in the Y-axis direction by the centering unit (40) to bring into close contact with the box stopper (52).

The cargo alignment sensor (or box end sensor) (53) may be disposed adjacent to the box stopper (52) at the rear end of the Y-axis of both main roller lanes among the free roller lanes (51), and confirm whether the box (3) is positioned in contact with the box stopper (52), that is, recognize whether the loaded cargo (box) is aligned. The cargo alignment sensor (53) may be a direct reflection sensor.

The entry guide block (54) may be installed at the front end of the Y-axis of the auxiliary roller lane among the free roller lanes (51) to guide the entry path of the transport vehicle (carriage, etc.).

The transport vehicle end stopper (55) may be disposed adjacent to the box stopper (52) to prevent a collision between the transport vehicle (forklift, etc.) and the box cover stacking stand (90). The transport vehicle end stopper (55) may be a plate-like structural object disposed in the Z-axis direction, and may be disposed inside both box stoppers (52) on the same line as the box stopper (52).

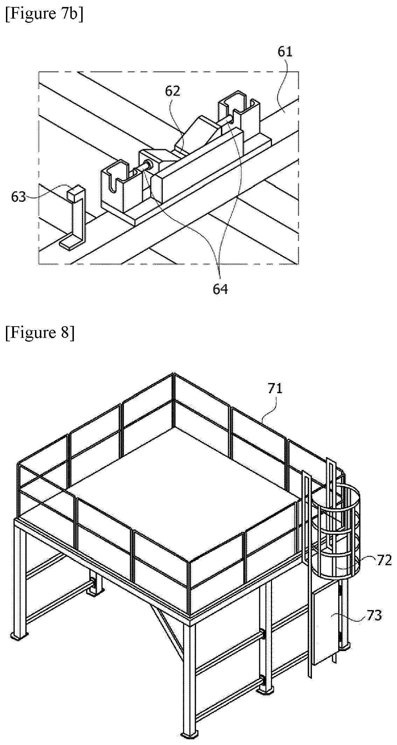

Referring to Figures 7a and 7b, the bobbin stacking stand (60) may be composed of a stacking stand frame (61), a guide block (62), a cargo detection sensor (63), a bobbin detection sensor (64), a transport vehicle end stopper (65), and the like.

The bobbin stacking stand (60) is a place where the bobbin (1) is placed, which may be installed at the rear end of the Y-axis of the main frame unit (10).

The stacking stand frame (61) forms a basic skeleton, which may consist of a three-dimensional structure in the form of a hexahedron.

The guide block (62) may be installed on the upper part of the stacking stand frame (61) to prevent the bobbin (1) from being pushed in the axial direction. The guide blocks (62) may be disposed in the Y-axis direction at both ends of the X-axis direction among the upper ends of the stacking stand frame (61), and may comprise two inclined surfaces facing each other at the center.

The cargo detection sensor (63) may be installed on the upper part of the stacking stand frame (61) to determine whether there is a loaded cargo (bobbin) in the stacking stand frame (61). The cargo detection sensors (63) may be arranged to cross each other in the diagonal direction at both ends in the X-axis direction among the upper ends of the stacking stand frame (61). The cargo detection sensor (63) may be a light transmitting/receiving sensor.

The bobbin detection sensor (64) may be installed on the guide block (62) to determine whether there is the bobbin (1) in the guide block (62). The bobbin detection sensors (64) may be installed at both ends of the guide block (62) in the Y-axis direction, respectively. The bobbin detection sensor (64) may be a photoelectric sensor.

The transport vehicle end stopper (65) may be installed at the rear end of the Y-axis of the stacking stand frame (61) to prevent a collision between the transport vehicle (forklift, carriage, etc.) and the bobbin stacking stand (60). The transport vehicle end stopper (65) may be an approximately plate-like structural object disposed in the Z-axis direction, and for example, two may be installed.

Referring to Figure 8, the cover assembly (70) may be composed of a cover assembly frame (71), a ladder (72), a safety door (73), and the like.

The cover assembly (70) is installed on the top and side surfaces of the main frame unit (10), and collectively refers to the guardrail above the transfer device facility, the ladder, and the safety door.

The cover assembly frame (71) forms a basic skeleton, which may consist of a three-dimensional structure in the form of a hexahedron.

The ladder (72) may be installed on the side surface of the cover assembly frame (71) to provide a movement path during upper maintenance, that is, which may be a passage to go up to the upper part of the transfer device facility during maintenance.

The safety door (73) may be installed on the side surface of the cover assembly frame (71) and the lower part of the ladder (72). When the safety door (73) is opened, the operation of the transfer device facility may stop due to interlocking.

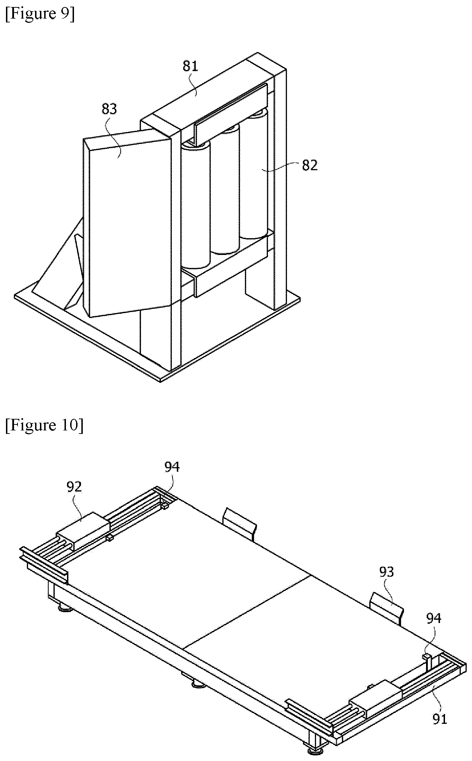

Referring to Figure 9, the entry guide (80) may be composed of an entry guide frame (81), a roller (82), a pad (83), and the like.

The entry guide (80) is installed at the entrance of the main frame unit (10) to guide the path of the transport vehicle (carriage, etc.) when the box (3) is put in.

The entry guide frame (81) forms a basic skeleton, which may consist of a three-dimensional structure. The entry guide frame (81) may be disposed toward the front end of both centering units (40) in the Y-axis direction, and may be provided with a plate-like structural object disposed in the Z-axis direction, and a support for supporting the plate-like structural object.

The roller (82) may be installed inside the entry guide frame (81) in the Z-axis direction to prevent friction between the transport vehicle (carriage, etc.) and the entry guide (80). The roller (82) may be composed of a plurality of rollers, for example, three rollers, as shown in the drawings.

The pad (83) may be installed toward the front end of the entry guide frame (81) to prevent damage to the transport vehicle (carriage, etc.) and the entry guide (80). The pad (83) may be made of stainless steel (SUS).

Referring to Figure 10, the box cover stacking stand (90) may be composed of a stacking stand frame (91), a centering cylinder (92), an end bracket (93), a seating detection sensor (94), and the like.

The box cover stacking stand (90) is a place where the box cover (3b) is placed, which may be installed at an intermediate position of the transfer device, for example, between the conveyor unit (50) and the bobbin stacking stand (60).

The stacking stand frame (91) forms a basic skeleton, which may consist of a plate-like structure.

The centering cylinder (92) is a cylinder for Y-axis centering of the box cover (3b), which may be installed at both ends of the stacking stand frame (91) in the X-axis direction. The end of the rod of the centering cylinder (92) may be connected to the cover pusher disposed in the X-axis direction, and the cover pusher may reciprocate in the Y-axis direction by the centering cylinder (92). The centering cylinder (92) may be a pneumatic cylinder.

The end bracket (93) is a stopper for Y-axis centering of the box cover (3b), which may be installed at the rear end of the stacking stand frame (91) in the Y-axis direction, and two may be installed in the X-axis direction. The end bracket (93) may be a plate-like structural object disposed in the Z-axis direction. The Y-axis centering may be performed while the box cover (3b) is pushed by the cover pusher of the centering cylinder (92) to bring into close contact with the end bracket (93).

The seating detection sensors (94) may be installed at both ends of the stacking stand frame (91) in the X-axis direction to check the regular position of the box cover (3b).

Referring to Figure 11, the maintenance frame (100) is for mounting a motor during maintenance, which may be installed on the upper part of the main frame unit (10). The maintenance frame (100) may consist of a three-dimensional structure.

The barcode reader is a device reading a barcode attached to the box (3) loaded with the bobbin (1), wherein various information of the bobbin (1) and the box (3) may be stored in the barcode. Although not shown in the drawings the barcode reader may be installed at an appropriate location among the main frame unit (10), the traveling drive unit (20), the fork unit (30), the centering unit (40), the conveyor unit (50), and the entry guide (80).

The control unit may automatically control lifting of the bobbin (1) by controlling Z-axis centering of the fork unit (30) in conjunction with the barcode reader and the distance sensor (36), X-axis centering of the fork unit (30) in conjunction with the chucking sensor (37), and Z-axis elevation and Y-axis movement of the fork unit (30), respectively.

In addition, the control unit may automatically control opening of the box cover (3b) by controlling Z-axis centering of the fork unit (30) in conjunction with the barcode reader and the distance sensor (36), X-axis centering of the fork unit (30) in conjunction with the box detection sensor (35), and Z-axis elevation and Y-axis movement of the fork unit (30), respectively.

Although not shown in the drawings, the control unit may be installed in an appropriate place, such as the main frame unit (10), and may be connected to each sensor, motor, cylinder, and the like. In addition, the control unit may be provided with an arithmetic/processing unit (CPU, MPU, etc.), a storage device (memory, drive, etc.), an input device (keyboard, mouse, button, switch, etc.), an output device (display, touch screen, etc.), and a communication device (LAN, modem, Wi-Fi, Bluetooth, etc.), a circuit board (main board, graphic card, etc.), and the like.

Hereinafter, the operating process of the transfer device according to the present invention will be described.

A first step is a step of opening the box cover (3b), and a second step is a primary packaging removal step. The first step may be performed automatically by the transfer device, and the second step may be performed manually by a worker.

First, the barcode attached to the box (3) is read through a barcode reader (BCR), and then the box (3) is put into the conveyor unit (50).

Next, the box (3) is automatically centered using the centering unit (40), where the control unit performs X-axis centering and Y-axis centering of the box (3) in conjunction with the BCR reading value and the box size check sensor (47).

Next, the box cover (3b) is automatically opened using the box cover cylinder (34a), and the box detection sensor (35) and the distance sensor (36) of the fork unit (30), where the control unit performs Z-axis centering of the fork unit (30) in conjunction with the BCR reading value and the distance sensor (36), and performs X-axis centering in conjunction with the box detection sensor (35). The cover pushers (34c) of both box cover cylinders (34a) advance towards the inside of the X-axis to chuck the box cover (3b).

Next, through the traveling drive unit (20), the fork unit (30) ascends along the Z-axis and moves backward along the Y-axis in a state of chucking the box cover (3b), and then descends towards the box cover stacking stand (90), and releases the chucking to load the box cover (3b) on the box cover stacking stand (90). Even when the box cover (3b) is moved and the chucking is released, the control unit may interlock with the distance sensor (36) and the box detection sensor (35).

Next, the box cover (3b) is centered in the Y-axis using the centering cylinder (92) on the box cover stacking stand (90).

A third step is a step of chucking and transferring the bobbin (1), and a fourth step is a worker bobbin transfer step. The third step may be automatically performed by the transfer device, and the fourth step may be performed manually by a worker.

First, the traveling drive unit (20) and the fork unit (30), which are transfer members, move to the position of the conveyor unit (50), which is an origin.

Next, the bobbin (1) is automatically chucked and lifted using the orthogonal robot (32), and the fork (33b), the distance sensor (36) and the chucking sensor (37) of the fork unit (30), where the control unit performs Z-axis centering of the fork unit (30) in conjunction with the BCR reading value and the distance sensor (36), and performs X-axis centering in conjunction with the chucking sensor (37). Both forks (33b) of the fork unit (30) advance on the inside of the X-axis to be inserted into the hollow ends (1a) of the bobbin (1), and simultaneously chuck the bobbin (1).

Next, through the traveling drive unit (20), the fork unit (30) ascends along the Z-axis and moves backward along the Y-axis in a state of chucking the bobbin (1), and then descends from the bobbin stacking stand (60), and releases the chucking to load the bobbin (1) on the bobbin stacking stand (60). Even when the bobbin (1) is moved and the chucking is released, the control unit may interlock with the distance sensor (36) and the chucking sensor (37).

Next, the fork unit (30) moves to the position of the box cover stacking stand (90), which is a standby position.

Next, a worker transfers the bobbin (1) loaded on the bobbin stacking stand (60) using a transport vehicle.

A fifth step is a step of returning the box cover (3b), and a sixth step is an empty box recovery step. The fifth step may be automatically performed by the transfer device, and the sixth step may be performed manually by a worker.

First, the fork unit (30) moves to the box cover position, which is in the middle position of the transfer device.

Next, the fork unit (30) chucks the box cover (3b) in a state of being centered to the Y-axis through the centering cylinder (92) on the box cover stacking stand (90), in the same manner as the above-described method, through the Z-axis centering and the X-axis centering.

Next, through the traveling drive unit (20), the fork unit (30) ascends along the Z-axis and moves forward along the Y-axis in a state of chucking the box cover (3b), and then descends from the conveyor unit (50), and releases the chucking to reassemble the box cover (3b) with the empty box body (3a) without the bobbin (1).

Next, the fork unit (30) moves to the position of the box cover stacking stand (90), which is a standby position.

Finally, a worker transfers and collects the reassembled empty box (3) from the conveyor unit (50) using a transport vehicle.

### [Explanation of Reference Numerals]

1: bobbin, 1a: hollow end, 2: foil, 3: box, 3a: box body, 3b: box cover, 10: main frame unit, 11: main frame, 12: light curtain sensor, 13: cableveyor, 14 : LM guide, 15: traveling regular position sensor, 16: traveling backward limit sensor, 17: traveling forward limit sensor, 20: traveling drive unit, 21: traveling drive unit frame, 22: traveling motor, 23: elevating motor, 24: rack jack, 25: elevating guide bush, 26: sensor support, 27: elevating regular position sensor, 28: elevating ascent limit sensor, 29: elevating descent limit sensor, 30: fork unit, 31: fork unit frame, 32: orthogonal robot, 33a: fork arm, 33b: fork, 34a: box cover cylinder, 34b: cylinder rod, 34c: cover pusher, 34d: connecting member, 35: box detection sensor, 36: distance sensor, 37: chucking sensor, 38: elevating guide shaft, 39a: sensor support, 39b: elevating origin sensor, 39c: elevating limit sensor, 40: centering unit, 41: centering unit frame, 42: Y-axis cylinder, 43: moving plate, 44: X-axis cylinder, 45: box pusher, 46: LM guide, 47: size check sensor, 50: conveyor unit, 51: free roller lane, 52: box stopper, 53: cargo alignment sensor, 54: entry guide block, 55: transport vehicle end stopper, 60 : bobbin stacking stand, 61: stacking stand frame, 62: guide block, 63: cargo detection sensor, 64: bobbin detection sensor, 65: transport vehicle end stopper, 70: cover assembly, 71: cover assembly frame, 72: ladder, 73: safety door, 80: entry guide, 81: entry guide frame, 82: roller, 83: pad, 90: box cover stacking stand, 91: stacking stand frame, 92: centering cylinder, 93: end bracket, 94: seating detection sensor, 100: maintenance frame

## Claims

1. A transfer device comprising:
a barcode reader for reading a barcode attached to a box (3) accommodating a bobbin (1) loaded with raw materials;
a fork unit (30) chucking the bobbin (1) in the X-axis direction corresponding to the width direction or the lateral direction, and provided with a distance sensor (36) for sensing a distance to the bobbin (1), and a chucking sensor (37) for sensing the bobbin (1) chucking;
a traveling drive unit (20) connected to the fork unit (30) at the top of the fork unit (30), elevating the fork unit (30) in the Z-axis direction corresponding to the height direction or the elevating direction, and moving the fork unit (30) in the Y-axis direction corresponding to the longitudinal direction or the traveling direction; and
a control unit for controlling Z-axis centering of the fork unit (30) in conjunction with the barcode reader and the distance sensor (36), X-axis centering of the fork unit (30) in conjunction with the chucking sensor (37), and Z-axis elevation and Y-axis movement of the fork unit (30), respectively, to automatically control lifting of the bobbin (1).

2. The transfer device according to claim 1, wherein
the fork unit (30) comprises: a fork unit frame (31) having a plate-like structure; an orthogonal robot (32) provided with a motor, and installed on the lower part of the fork unit frame (31) to be movable in the X-axis direction; a fork arm (33a) installed on the lower part of the orthogonal robot (32); a fork (33b) installed inside the lower end of the fork arm (33a) to chuck the bobbin (1); a distance sensor (36) installed on the lower part of the orthogonal robot (32) to the inside of the fork arm (33a); a chucking sensor (37) installed at the lower end of the fork arm (33a); an elevating guide shaft (38) installed on the upper part of the fork unit frame (31); a sensor support (39a) installed toward the upper part of the fork unit frame (31); and an elevating regular position sensor (27) and an elevating limit sensor (39c) installed on the sensor support (39a).

3. The transfer device according to claim 2, wherein
the traveling drive unit (20) comprises: a traveling drive unit frame (21) having a plate-like structure; a traveling motor (22) for movement in the Y-axis direction installed on the upper part of the traveling drive unit frame (21); a elevating motor (23) for movement in the Z-axis direction installed on the upper part of the traveling drive unit frame (21); a rack jack (24) installed in the traveling drive unit frame (21) in the Z-axis direction to enable elevation, converting rotation of the elevating motor (23) into linear motion, and connected to the fork unit (30) to elevate the fork unit (30); an elevating guide bush (25) installed in the traveling drive unit frame (21), and inserted by an elevating guide shaft (38) of the fork unit (30); a sensor support (39a) installed in the traveling drive unit frame (21) in the Z-axis direction; and an elevating regular position sensor (27) and an elevating limit sensor (39c) installed on the sensor support (39a).

4. The transfer device according to claim 1, further comprising
a conveyor unit disposed on the lower part of the fork unit (30), and putting the box (3) thereon; wherein
the conveyor unit comprises: a free roller lane (51) for moving the box (3) in the Y-axis direction; a box (3) stopper installed at the rear end of the Y-axis of the free roller lane (51) for Y-axis centering of the box (3); a cargo alignment sensor (53) disposed adjacent to the box (3) stopper to check whether the box (3) is positioned in contact with the box (3) stopper; an entry guide block (54) installed at the front end of the Y-axis of the free roller lane (51) to guide the entry path of a transport vehicle; and a transport vehicle end stopper (55) disposed adjacent to the box (3) stopper to prevent a collision between the transfer device and the transport vehicle.

5. The transfer device according to claim 4, further comprising
a centering unit (40) installed outside the conveyor unit (50) in the X-axis direction and adjusting the position of the box (3) in the X-axis direction and the Y-axis direction; wherein
the centering unit (40) comprises: a box (3) pusher contacting the box (3) for centering the box (3); an X-axis cylinder (44) connected to the box (3) pusher to move the box (3) pusher in the X-axis direction; a moving plate (43) on which the X-axis cylinder (44) is installed; a Y-axis cylinder (42) connected to the moving plate to move the box (3) pusher in the Y-axis direction; an LM guide (46) connected to the moving plate (43) to guide movement of each axis direction; a centering unit frame (41) in which the Y-axis cylinder (42) is installed; and a size check sensor (47) installed on the upper part of the centering unit frame (41) to check the size of the box (3).

6. The transfer device according to claim 3, further comprising
a main frame unit (10); wherein
the main frame unit (10) comprises: a three-dimensional main frame; a light curtain sensor (12) installed on the side of the main frame (11) to be interlocked with the control unit during maintenance; a cableveyor (13) installed on the upper part of the main frame (11) to guide cables; an LM guide (14) installed on the upper part of the main frame (11) and connected to the traveling drive unit frame (21) to guide the traveling direction of the traveling drive unit frame (21); and a traveling regular position sensor (15) and a traveling limit sensor (16, 17) installed on the upper part of the main frame (11).

7. The transfer device according to claim 6, further comprising
a bobbin stacking stand installed at the rear end of the Y-axis of the main frame unit (10) to place the bobbin (1) thereon; wherein
the bobbin stacking stand comprises: a three-dimensional stacking stand frame; a guide block (62) installed on the upper part of the stacking stand frame to prevent the bobbin (1) from being pushed in the axial direction; a cargo detection sensor (63) installed on the upper part of the stacking stand frame (61) to determine whether the bobbin (1) is present in the bobbin stacking stand; a bobbin (1) detection sensor installed on the guide block (62) to determine whether the bobbin (1) is present in the guide block (62); and a transport vehicle end stopper 55() installed toward the rear end of the Y-axis of the stacking stand frame to prevent a collision between the transport vehicle and the bobbin stacking stand.

8. The transfer device according to claim 6, further comprising
a cover assembly (70) installed on the top and side surfaces of the main frame unit (10); wherein
the cover assembly (70) comprises: a three-dimensional cover assembly frame (71); a ladder (72) installed on the side surface of the cover assembly frame (71) to provide a movement path during maintenance; and a safety door (73) installed on the side surface of the cover assembly frame (71).

9. The transfer device according to claim 6, further comprising
an entry guide (80) installed at the entrance of the main frame unit (10) to guide the path of the transport vehicle when the box (3) is input; wherein
the entry guide (80) comprises: a three-dimensional entry guide frame (81); a roller (82) installed in the Z-axis direction inside the entry guide (80) frame to prevent friction between the transport vehicle and the entry guide (80); and a pad (83) installed toward the front end of the entry guide frame (81) to prevent damage to the transport vehicle and the entry guide (80).

10. The transfer device according to claim 6, further comprising
a maintenance frame installed on the upper part of the main frame unit (10) to be for mounting the motor during maintenance.

## Patentansprüche

1. Transfervorrichtung aufweisend:
einen Barcode-Leser zum Lesen eines Barcodes, der an einer Box (3) angebracht ist, die eine Spule (1) aufnimmt, welche Rohmaterialien trägt;
eine Gabeleinheit (30), die die Spule (1) in der X-Achsenrichtung entsprechend der Breitenrichtung oder der seitlichen Richtung einspannt und mit einem Abstandssensor (36) zum Erfassen eines Abstands zu der Spule (1) und einem Einspannsensor (37) zum Erfassen des Einspannens der Spule (1) versehen ist;
eine Fahrantriebseinheit (20), die mit der Gabeleinheit (30) an der Oberseite der Gabeleinheit (30) verbunden ist, die Gabeleinheit (30) in der Z-Achsenrichtung entsprechend der Höhenrichtung oder der Anheberichtung anhebt und die Gabeleinheit (30) in der Y-Achsenrichtung entsprechend der Längsrichtung oder der Fahrrichtung bewegt; und
eine Steuereinheit zum Steuern der Z-Achsenzentrierung der Gabeleinheit (30) in Verbindung mit dem Barcode-Leser und dem Abstandssensor (36), der X-Achsenzentrierung der Gabeleinheit (30) in Verbindung mit dem Einspannsensor (37) und der Z-Achsenanhebung bzw. der Y-Achsenbewegung der Gabeleinheit (30), um das Anheben der Spule (1) automatisch zu steuern.

2. Transfervorrichtung nach Anspruch 1, wobei
die Gabeleinheit (30) aufweist: einen Gabeleinheitsrahmen (31) mit einer plattenartigen Struktur; einen orthogonalen Roboter (32), der mit einem Motor versehen ist und an dem unteren Teil des Gabeleinheitsrahmens (31) installiert ist, um in der X-Achsenrichtung bewegbar zu sein; einen Gabelarm (33a), der an dem unteren Teil des orthogonalen Roboters (32) installiert ist; eine Gabel (33b), die innerhalb des unteren Endes des Gabelarms (33a) installiert ist, um die Spule (1) einzuspannen; einen Abstandssensor (36), der an dem unteren Teil des orthogonalen Roboters (32) zu der Innenseite des Gabelarms (33a) installiert ist; einen Einspannsensor (37), der an dem unteren Ende des Gabelarms (33a) installiert ist; eine Anhebeführungswelle (38), die an dem oberen Teil des Gabeleinheitsrahmens (31) installiert ist; einen Sensorträger (39a), der in Richtung des oberen Teils des Gabeleinheitsrahmens (31) installiert ist; und einen Anhebenormalpositionssensor (27) und einen Anhebegrenzsensor (39c), die an dem Sensorträger (39a) installiert sind.

3. Transfervorrichtung nach Anspruch 2, wobei
die Fahrantriebseinheit (20) aufweist: einen Fahrantriebseinheitsrahmen (21) mit einer plattenartigen Struktur; einen Fahrmotor (22) zur Bewegung in der Y-Achsenrichtung, der an dem oberen Teil des Fahrantriebseinheitsrahmens (21) installiert ist; einen Anhebemotor (23) zur Bewegung in der Z-Achsenrichtung, der an dem oberen Teil des Fahrantriebseinheitsrahmens (21) installiert ist; einen Gestellheber (24), der in dem Fahrantriebseinheitsrahmen (21) in der Z-Achsenrichtung installiert ist, um das Anheben zu ermöglichen, die Drehung des Anhebemotors (23) in eine lineare Bewegung umwandelt, und mit der Gabeleinheit (30) verbunden ist, um die Gabeleinheit (30) anzuheben; eine Anhebeführungsbuchse (25), die in dem Fahrantriebseinheitsrahmen (21) installiert ist und durch eine Anhebeführungswelle (38) der Gabeleinheit (30) eingesetzt ist; einen Sensorträger (39a), der in dem Fahrantriebseinheitsrahmen (21) in der Z-Achsenrichtung installiert ist; und einen Anhebenormalpositionssensor (27) und einen Anhebegrenzsensor (39c), die an dem Sensorträger (39a) installiert sind.

4. Transfervorrichtung nach Anspruch 1, ferner aufweisend
eine Fördereinheit, die an dem unteren Teil der Gabeleinheit (30) angeordnet ist und die Box (3) darauf platziert; wobei
die Fördereinheit aufweist: eine freie Rollenbahn (51) zum Bewegen der Box (3) in der Y-Achsenrichtung; einen Box-Stopper, der an dem hinteren Ende der Y-Achse der freien Rollenbahn (51) zur Y-Achsenzentrierung der Box (3) installiert ist; einen Frachtausrichtungssensor (53), der benachbart zu dem Box-Stopper angeordnet ist, um zu prüfen, ob die Box (3) in Kontakt mit dem Box-Stopper positioniert ist; einen Eintrittsführungsblock (54), der an dem vorderen Ende der Y-Achse der freien Rollenbahn (51) installiert ist, um den Eintrittsweg eines Transportfahrzeugs zu führen; und einen Transportfahrzeugendstopper (55), der benachbart zu dem Box-Stopper angeordnet ist, um eine Kollision zwischen der Transfervorrichtung und dem Transportfahrzeug zu verhindern.

5. Transfervorrichtung nach Anspruch 4, ferner aufweisend
eine Zentriereinheit (40), die außerhalb der Fördereinheit (50) in der X-Achsenrichtung installiert ist und die Position der Box (3) in der X-Achsenrichtung und der Y-Achsenrichtung einstellt; wobei
die Zentriereinheit (40) aufweist: einen Box-Schieber, der die Box (3) zum Zentrieren der Box (3) kontaktiert; einen X-Achsenzylinder (44), der mit dem Box-Schieber verbunden ist, um den Box-Schieber in der X-Achsenrichtung zu bewegen; eine Bewegungsplatte (43), an der der X-Achsenzylinder (44) installiert ist; einen Y-Achsenzylinder (42), der mit der Bewegungsplatte verbunden ist, um den Box-Schieber in der Y-Achsenrichtung zu bewegen; eine LM-Führung (46), die mit der Bewegungsplatte (43) verbunden ist, um die Bewegung jeder Achsenrichtung zu führen; einen Zentriereinheitsrahmen (41), in dem der Y-Achsenzylinder (42) installiert ist; und einen Größenprüfsensor (47), der an dem oberen Teil des Zentriereinheitsrahmens (41) installiert ist, um die Größe der Box (3) zu prüfen.

6. Transfervorrichtung nach Anspruch 3, ferner aufweisend
eine Hauptrahmeneinheit (10); wobei
die Hauptrahmeneinheit (10) aufweist: einen dreidimensionalen Hauptrahmen; einen Lichtvorhangsensor (12), der an der Seite des Hauptrahmens (11) installiert ist, um während der Wartung mit der Steuereinheit verriegelt zu werden; einen Kabellieferer (13), der an dem oberen Teil des Hauptrahmens (11) installiert ist, um Kabel zu führen; eine LM-Führung (14), die an dem oberen Teil des Hauptrahmens (11) installiert ist und mit dem Fahrantriebseinheitsrahmen (21) verbunden ist, um die Fahrrichtung des Fahrantriebseinheitsrahmens (21) zu führen; und einen Fahrnormalpositionssensor (15) und einen Fahrgrenzsensor (16, 17), die an dem oberen Teil des Hauptrahmens (11) installiert sind.

7. Transfervorrichtung nach Anspruch 6, ferner aufweisend
einen Spulenstapelständer, der an dem hinteren Ende der Y-Achse der Hauptrahmeneinheit (10) installiert ist, um die Spule (1) darauf zu platzieren; wobei
der Spulenstapelständer aufweist: einen dreidimensionalen Stapelständerrahmen; einen Führungsblock (62), der an dem oberen Teil des Stapelständerrahmens installiert ist, um zu verhindern, dass die Spule (1) in der axialen Richtung geschoben wird; einen Frachterfassungssensor (63), der an dem oberen Teil des Stapelständerrahmens (61) installiert ist, um zu bestimmen, ob die Spule (1) in dem Spulenstapelständer vorhanden ist; einen Spulen-Erfassungssensor, der an dem Führungsblock (62) installiert ist, um zu bestimmen, ob die Spule (1) in dem Führungsblock (62) vorhanden ist; und einen Transportfahrzeugendstopper (55), der in Richtung des hinteren Endes der Y-Achse des Stapelständerrahmens installiert ist, um eine Kollision zwischen dem Transportfahrzeug und dem Spulenstapelständer zu verhindern.

8. Transfervorrichtung nach Anspruch 6, ferner aufweisend
eine Abdeckanordnung (70), die an der oberen Fläche und der Seitenfläche der Hauptrahmeneinheit (10) installiert ist; wobei
die Abdeckanordnung (70) aufweist: einen dreidimensionalen Abdeckanordnungsrahmen (71); eine Leiter (72), die an der Seitenfläche des Abdeckanordnungsrahmens (71) installiert ist, um während der Wartung einen Bewegungspfad bereitzustellen; und eine Sicherheitstür (73), die an der Seitenfläche des Abdeckanordnungsrahmens (71) installiert ist.

9. Transfervorrichtung nach Anspruch 6, ferner aufweisend
eine Eintrittsführung (80), die an dem Eingang der Hauptrahmeneinheit (10) installiert ist, um den Pfad des Transportfahrzeugs zu führen, wenn die Box (3) eingegeben wird; wobei
die Eintrittsführung (80) aufweist: einen dreidimensionalen Eintrittsführungsrahmen (81); eine Rolle (82), die in der Z-Achsenrichtung innerhalb des Eintrittsführungsrahmens (80) installiert ist, um eine Reibung zwischen dem Transportfahrzeug und der Eintrittsführung (80) zu verhindern; und ein Polster (83), das in Richtung des vorderen Endes des Eintrittsführungsrahmens (81) installiert ist, um eine Beschädigung des Transportfahrzeugs und der Eintrittsführung (80) zu verhindern.

10. Transfervorrichtung nach Anspruch 6, ferner aufweisend
einen Wartungsrahmen, der an dem oberen Teil der Hauptrahmeneinheit (10) installiert ist, um während der Wartung den Motor zu montieren.

## Revendications

1. Dispositif de transfert comprenant :
un lecteur de codes-barres pour la lecture d'un code-barres fixé sur une boîte (3) contenant une bobine (1) chargée de matières premières ;
un module de fourche (30) serrant la bobine (1) dans le sens de l'axe X correspondant au sens de la largeur ou à la direction latérale, et pourvu d'un capteur de distance (36) pour détecter une distance jusqu'à la bobine (1), et d'un capteur de serrage (37) pour détecter le serrage de la bobine (1) ;
un organe moteur de translation (20) relié au module de fourche (30) sur le dessus du module de fourche (30), levant le module de fourche (30) dans le sens de l'axe Z correspondant à la direction de la hauteur ou à la direction du levage, et déplaçant le module de fourche (30) dans le sens de l'axe Y correspondant à la direction longitudinale ou au sens de la translation ; et
un module de commande pour commander le centrage de l'axe Z du module de fourche (30) conjointement au lecteur de code-barres et au capteur de distance (36), le centrage dans l'axe X du module de fourche (30) conjointement au capteur de serrage (37), et le levage dans l'axe Z et la translation dans l'axe Y du module de fourche (30), respectivement, pour commander automatiquement le levage de la bobine (1).

2. Dispositif de transfert selon la revendication 1,
le module de fourche (30) comprenant : un bâti de module de fourche (31) ayant une structure en forme de plaque ; un robot orthogonal (32) équipé d'un moteur, et installé sur la partie inférieure du bâti du module de fourche (31) afin d'être mobile dans le sens de l'axe X ; un bras de fourche (33a) installé sur la partie inférieure du robot orthogonal (32) ; une fourche (33b) installée à l'intérieur de l'extrémité inférieure du bras de fourche (33a) pour serrer la bobine (1) ; un capteur de distance (36) installé sur la partie inférieure du robot orthogonal (32) à l'intérieur du bras de fourche (33a) ; un capteur de serrage (37) installé à l'extrémité inférieure du bras de fourche (33a) ; un arbre de guidage de levage (38) installé sur la partie supérieure du bâti de l'unité de fourche (31) ; un support de capteur (39a) installé vers la partie supérieure du bâti de l'unité de fourche (31) ; ainsi qu'un capteur de position régulière du levage (27) et un capteur de limite de levage (39c) installés sur le support de capteur (39a).

3. Dispositif de transfert selon la revendication 2,
l'organe moteur de translation (20) comprenant : un bâti d'organe moteur de translation (21) ayant une structure en forme de plaque ; un moteur de translation (22) pour la translation dans le sens de l'axe Y, installé sur la partie supérieure du bâti d'organe moteur de translation (21) ; un moteur de levage (23) pour le déplacement dans le sens de l'axe Z, installé sur la partie supérieure du bâti d'organe moteur de translation (21) ; un vérin à crémaillère (24) installé dans le bâti d'organe moteur de translation (21) dans le sens de l'axe Z pour permettre le levage, en convertissant la rotation du moteur de levage (23) en déplacement linéaire, et relié au module de fourche (30) pour le levage du module de fourche (30) ; une douille de guidage de levage (25) installée dans le bâti d'organe moteur de translation (21), et insérée par un arbre de guidage de levage (38) du module de fourche (30) ; un support de capteur (39a) installé dans le bâti de l'organe moteur de translation (21) dans le sens de l'axe Z ; ainsi qu'un capteur de position régulière de levage (27) et un capteur de limite de levage (39c) installés sur le support de capteur (39a).

4. Dispositif de transfert selon la revendication 1, comprenant en outre:
une unité de transport disposée sur la partie inférieure du module de fourche (30), et plaçant la boîte (3) sur celui-ci ;
l'unité de transport comprenant : une voie de roulement libre (51) pour déplacer la boîte (3) dans la direction de l'axe Y ; une butée de boîte (3) installée à l'extrémité postérieure de l'axe Y de la voie de roulement libre (51) pour le centrage de l'axe Y de la boîte (3) ; un capteur d'alignement de cargaison (53) disposé dans une position adjacente à la butée de boîte (3) pour vérifier si la boîte (3) est positionnée en contact avec la butée de boîte (3) ; un bloc de guidage d'entrée (54) installé à l'extrémité antérieure de l'axe Y de la voie de roulement libre (51) pour guider le chemin d'entrée d'un véhicule de transport ; et une butée d'extrémité de véhicule de transport (55) disposée dans une position adjacente à la butée de boîte (3) pour empêcher toute collision entre le dispositif de transfert et le véhicule de transport.

5. Dispositif de transfert selon la revendication 4, comprenant en outre:
une unité de centrage (40) installée à l'extérieur de l'unité de transport (50) dans le sens de l'axe X et ajustant la position de la boîte (3) dans la direction de l'axe X et la direction de l'axe Y ;
l'unité de centrage (40) comprenant : un poussoir de boîte (3) en contact avec la boîte (3) pour centrer la boîte (3) ; un cylindre d'axe X (44) relié au poussoir de boîte (3) pour déplacer le poussoir de boîte (3) dans le sens de l'axe X ; une plaque mobile (43) sur laquelle le cylindre d'axe X (44) est installé ; un cylindre d'axe Y (42) relié à la plaque mobile pour déplacer le poussoir de boîte (3) dans le sens de l'axe Y ; un guide LM (46) relié à la plaque mobile (43) pour guider le mouvement de chaque direction d'axe ; un bâti d'unité de centrage (41) dans lequel le cylindre d'axe Y (42) est installé ; et un capteur de contrôle de la taille (47) installé sur la partie supérieure du bâti de l'unité de centrage (41) pour vérifier la taille de la boîte (3).

6. Dispositif de transfert selon la revendication 3, comprenant en outre:
un module de bâti principal (10) ;
le module de bâti principal (10) comprenant : un bâti principal tridimensionnel ; un capteur de rideau lumineux (12) installé sur le côté du bâti principal (11) pour être enclenché avec le module de commande au cours de l'entretien; un porte-câbles (13) installé sur la partie supérieure du bâti principal (11) pour guider les câbles ; un guide LM (14) installé sur la partie supérieure du bâti principal (11) et connecté au bâti d'organe moteur de translation (21) pour guider le sens de la translation du bâti de l'organe moteur de translation (21); ainsi qu'un capteur de position régulière de translation (15) et un capteur de limite de translation (16, 17) installés sur la partie supérieure du bâti principal (11).

7. Dispositif de transfert selon la revendication 6, comprenant en outre:
un support d'empilage de bobines installé à l'extrémité postérieure de l'axe Y de l'unité de bâti principal (10) pour y placer la bobine (1) ;
le support d'empilage de bobines comprenant : un bâti de support d'empilage tridimensionnel ; un bloc de guidage (62) installé sur la partie supérieure du bâti de support d'empilage pour empêcher la bobine (1) d'être poussée dans le sens axial ; un capteur de détection de charge (63) installé sur la partie supérieure du bâti de support d'empilage (61) pour déterminer si la bobine (1) est présente dans le support d'empilage de bobines ; un capteur de détection de bobine (1) installé sur le bloc de guidage (62) pour déterminer si la bobine (1) est présente dans le bloc de guidage (62) ; et une butée d'extrémité de véhicule de transport (55) installée vers l'extrémité postérieure de l'axe Y du bâti de support d'empilage pour empêcher toute collision entre le véhicule de transport et le support d'empilage de bobines.

8. Dispositif de transfert selon la revendication 6, comprenant en outre:
un ensemble de couvercle (70) installé sur les surfaces supérieure et latérale de l'unité de bâti principal (10) ;
l'ensemble de couvercle (70) comprenant : un bâti d'ensemble de couvercle tridimensionnel (71) ; une échelle (72) installée sur la surface latérale du bâti d'ensemble de couvercle (71) pour agencer un chemin de déplacement au cours de l'entretien ; et une porte de sécurité (73) installée sur la surface latérale du bâti d'ensemble de couverture (71).

9. Dispositif de transfert selon la revendication 6, comprenant en outre:
un guide d'entrée (80) installé à l'entrée de l'unité de bâti principal (10) pour guider le trajet du véhicule de transport lorsque la boîte (3) est entrée ;
le guide d'entrée (80) comprenant : un bâti de guide d'entrée tridimensionnel (81) ; un rouleau (82) installé dans le sens de l'axe Z à l'intérieur du bâti du guide d'entrée (80) pour empêcher tout frottement entre le véhicule de transport et le guide d'entrée (80) ; et un tampon (83) installé vers l'extrémité antérieure du bâti de guide d'entrée (81) pour empêcher tout endommagement du véhicule de transport et du guide d'entrée (80).

10. Dispositif de transfert selon la revendication 6, comprenant en outre:
un bâti d'entretien installé sur la partie supérieure de l'unité de bâti principal (10) servant au montage du moteur au cours de l'entretien.
